# EUROPEAN PATENT APPLICATION

(11) **EP 2 485 209 A1**
(43) Date of publication of application: **08.08.2012**
(21) Application number: 10854917.1
(22) Date of filing: 13.10.2010
(51) Int. Cl.: G09G 3/34, H04M 1/725

(54) **METHOD AND DEVICE FOR CONTROLLING BACKLIGHT OF SCREEN**

(30) Priority: 22.07.2010 CN 201010234833
(71) Applicant: ZTE Corporation, Shenzhen, Guangdong 518057 (CN)
(72) Inventor: GE, Yunyi, Guangdong 518057 (CN)
(74) Representative: Zinkler, Franz
(86) International application number: PCT/CN2010/077706
(87) International publication number: WO 2012/009887

(57) **Abstract**

The present invention discloses a method and an apparatus for controlling a screen backlight, and the method comprises: receiving a trigger instruction of the screen backlight; querying in preset information for active screen backlight attributes corresponding to a time period which contains a current time point; and controlling the screen backlight according to the active screen backlight attributes. The method and apparatus for controlling the screen backlight of the present invention achieves the automatic control of the screen backlight, eliminating the need for manual control by a user by way of querying in preset information for active screen backlight attributes corresponding to a time period which contains a current time point and controlling the screen backlight according to the active screen backlight attributes.

## Description

### Field of the Invention

The present invention relates to the communication technology field, and in particular to a method and an apparatus for controlling a screen backlight.

### Background of the Invention

In the prior art, the screen backlight of the screen of various communication electronic products, e.g., mobile terminals such as the cell phone etc., can be self-controlled. However, the requirements by users for the screen backlight at different times and in different environments are different. For example, when it is under the sun during the day the screen needs to be controlled to have high brightness, and when it is in the early morning, the evening, and the night one needs to turn down the screen brightness and make backlight needs to be longer. Therefore, the existing method for controlling the screen backlight needs manually controlling many times in one day, thus causing trouble when using.

### Summary of the Invention

A main object of the present invention is to provide a method and an apparatus for controlling a screen backlight, so as to achieve automatic control of the screen backlight.

The present invention provides a method for controlling a screen backlight, and the method comprises: receiving a trigger instruction of the screen backlight; querying in preset information for active screen backlight attributes corresponding to a time period which contains a current time point; and controlling the screen backlight according to the active screen backlight attributes.

Preferably, said active screen backlight attributes comprise: a brightness value of the active screen backlight and a duration value of the active screen backlight.

Preferably, the steps of said controlling the screen backlight according to the active screen backlight attributes particularly are:
setting a screen backlight brightness to said brightness value of the active screen backlight, and calculating a screen backlight time; and
turning off the screen backlight when the screen backlight time reaches the duration value of the active screen backlight.

Preferably, said preset information comprises screen backlight attributes corresponding to each one of at least two time periods; and
said screen backlight attributes comprise: at least one brightness value of the screen backlight and at least one duration value of the screen backlight;
wherein, said brightness value of the active screen backlight is one of said brightness values of the screen backlight; and said duration value of the active screen backlight is one of said duration values of the screen backlight.

Preferably, a time range of each time period comprises: the time between a start time point and an end time point within the time period and the start time point.

Preferably, the method for controlling the screen backlight of the present invention further comprises:
receiving a set instruction, and generating the preset information according to the set instruction.

The present invention also provides an apparatus for controlling a screen backlight, and the apparatus comprises: a reception module for receiving a trigger instruction of the screen backlight; a query module for querying in preset information for active screen backlight attributes corresponding to a time period which contains a current time point; and a control module for controlling the screen backlight according to the active screen backlight attributes.

Preferably, said active screen backlight attributes comprise: a brightness value of the active screen backlight and a duration value of the active screen backlight.

Preferably, said control module comprises: a calculation unit for setting a screen backlight brightness to said brightness value of the active screen backlight, and calculating a screen backlight time; and a turn-off unit for turning off the screen backlight when the screen backlight time reaches the duration value of the active screen backlight.

Preferably, said preset information comprises screen backlight attributes corresponding to each one of at least two time periods; and
said screen backlight attributes comprise: at least one brightness value of the screen backlight and at least one duration value of the screen backlight;
wherein, said brightness value of the active screen backlight is one of said brightness values of the screen backlight; and said duration value of the active screen backlight is one of said duration values of the screen backlight.

Preferably, a time range of each time period comprises: the time between a start time point and an end time point within the time period and the start time point.

Preferably, the apparatus for controlling the screen backlight of the present invention further comprises: a generation module for receiving a set instruction, and generating the preset information according to the set instruction.

The method and apparatus for controlling the screen backlight of the present invention achieves the automatic control of the screen backlight, eliminating the need for manual control by a user by way of querying in preset information for active screen backlight attributes corresponding to a time period which contains a current time point and controlling the screen backlight according to the active screen backlight attributes.

### Brief Description of the Drawings

Fig. 1 is a flow chart of a method for controlling the screen backlight according to an embodiment of the present invention;
Fig. 2 is a flow chart of controlling the screen backlight according to the active screen backlight attributes according to the present invention;
Fig. 3 is a structural schematic diagram of an apparatus for controlling the screen backlight according to an embodiment of the present invention; and
Fig. 4 is a structural schematic diagram of an apparatus for controlling the screen backlight according to another embodiment of the present invention.

The implementation of objects, functional feathers and advantages of the present invention will be further described with reference to the accompanying drawings and in conjunction with embodiments.

### Detailed Description of Embodiments

It should be understood that the particular embodiments described herein are only used to explain the present invention without unduly limiting the scope of the present invention.

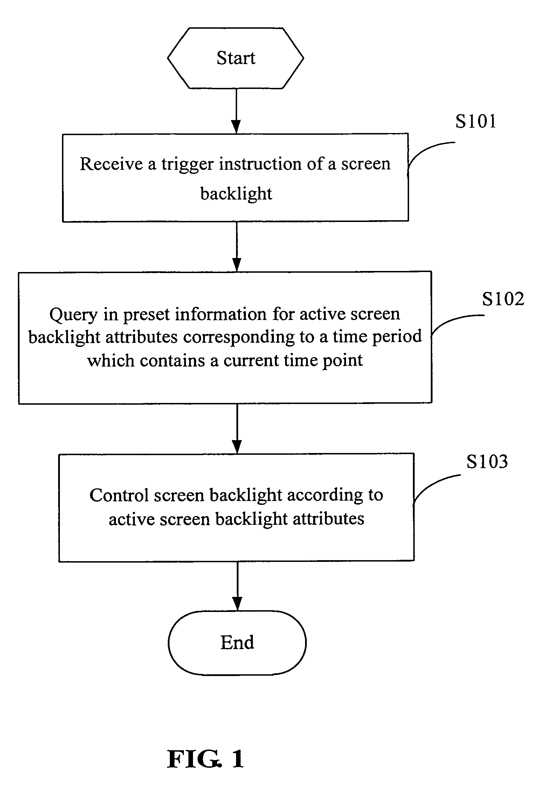

With reference to Fig. 1, a method for controlling the screen backlight according to an embodiment of the present invention is provided, and the method comprises:
step S101, receiving a trigger instruction of the screen backlight;
step S102, querying in preset information for active screen backlight attributes corresponding to a time period which contains a current time point; and
step S103, controlling the screen backlight according to the active screen backlight attributes.

The trigger instruction of the screen backlight which described above in the step S101 can be generated in the following situations (but not limited to): when receiving instant messages, receiving incoming call information, checking for messages or generating alarm prompt information.

Further, the above active screen backlight attributes comprise: a brightness value of the active screen backlight and a duration value of the active screen backlight. The brightness value and the duration value of the active screen backlight corresponding to each time period is one, respectively.

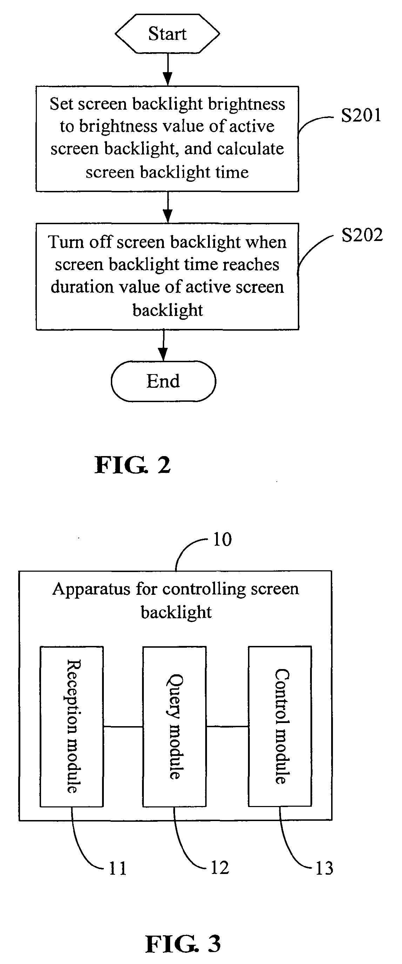

Further, with reference to Fig. 2, the above step S103 particularly comprises:
step S201, setting the screen backlight brightness to the brightness value of the active screen backlight, and calculating a screen backlight time; and
step S202, turning off the screen backlight when the screen backlight time reaches the duration value of the active screen backlight.

The start point for calculating the screen backlight time in the above step S201 is the current time point in the above step S101.

Further, the preset information described above comprises screen backlight attributes corresponding to each of at least two time periods; and the screen backlight attributes corresponding to each time period comprise: at least one brightness value of the screen backlight and at least one duration value of the screen backlight; wherein, the brightness value of the active screen backlight is one of the brightness values of the screen backlight described above. Namely no matter how many brightness values of the screen backlight correspond to each time period, one of them is selected to as the brightness value of the active screen backlight. If more than one brightness value of the screen backlight correspond to one time period, one of them can be selected as the brightness value of the active screen backlight according to the user's needs, and the rest of them are spare brightness values of the screen backlight. The duration value of the active screen backlight is one of the duration values of the screen backlight described above. Namely no matter how many duration values of the screen backlight correspond to each time period, one of them is selected as the duration value of the active screen backlight. If more than one duration value of the screen backlight correspond to one time period, one of them can be selected as the duration value of the active screen backlight according to the user's needs, and the rest of them are spare duration values of the screen backlight. The brightness value of the active screen backlight and the duration value of the active screen backlight constitute the active screen backlight attributes.

The number of the brightness values of the screen backlight and the particular brightness values of the backlight corresponding to each time period, and the number of the duration values of the screen backlight and the particular duration values of the backlight corresponding to each time period, as described above, can be set according to a user's wishes.

Further, a time range of each time period described above comprises: the time between a start time point and an end time point within the time period and the start time point. For example, a time period (7:00, 17:00) represents that 7:00 is the start time point of the time period and 17:00 is the end time point of the time period. The time range of the time period comprises: the start time point 7:00, and the time between the start time point 7:00 and the end time point 17:00, but not including the end time point 17:00.

The time range of each time period described above can also be defined as: the time between the start time point and the end time point within the time period and the end time point. For example, a time period (7:00, 17:00) represents that 7:00 is the start time point of the time period and 17:00 is the end time point of the time period. The time range of the time period comprises: the end time point 17:00, and the time between the start time point 7:00 and the end time point 17:00, but not including the start time point 7:00.

The present embodiment achieves automatic control of the screen backlight, eliminating the need for the manual control by a user, by way of querying in preset information for active screen backlight attributes corresponding to a time period which contains a current time point and controlling the screen backlight according to the active screen backlight attributes.

The method for controlling the screen backlight according to one embodiment of the present invention further comprises the following process steps: receiving a set instruction, and generating the preset information according to the set instruction. The set instruction is inputted by a user. After the preset information is generated, the screen backlight can be controlled according to the preset information when a trigger instruction of the screen backlight is received.

The method for controlling the screen backlight of the present invention can be applied for various electronic devices having a screen display function, e.g., various mobile terminal electronic devices such as cell phone, handheld TV, and media player etc..

With reference to Fig. 3, an apparatus 10 for controlling the screen backlight according to an embodiment of the present invention is provided, and the apparatus comprises: a reception module 11, a query module 12 and a control module 13. The reception module 11 is configured for receiving a trigger instruction of the screen backlight. The query module 12 is configured for querying in preset information for active screen backlight attributes corresponding to a time period which contains a current time point. The control module 13 is configured for controlling the screen backlight according to the active screen backlight attributes.

The above trigger instruction of the screen backlight can be generated in the following situations (but not limited to): when receiving instant messages, receiving incoming call information, checking for messages or generating alarm prompt information.

Further, the active screen backlight attributes described above comprise: a brightness value of the active screen backlight and a duration value of the active screen backlight.

Further, the control module 13 comprises: a calculation unit for setting a screen backlight brightness at the brightness value of the active screen backlight, and calculating a screen backlight time; and a turn-off unit for turning off the screen backlight when the screen backlight time reaches the duration value of the active screen backlight.

The start point for calculating the screen backlight time is the above-mentioned current time point.

Further, the above-mentioned preset information comprises screen backlight attributes corresponding to each of at least two time periods; and the screen backlight attributes corresponding to each time period comprise: at least one brightness value of the screen backlight and at least one duration value of the screen backlight; wherein, the brightness value of the active screen backlight is one of the brightness values of the screen backlight. Namely no matter how many brightness values of the screen backlight correspond to each time period, one of them is selected as the brightness value of the active screen backlight. If more than one brightness value of the screen backlight correspond to one time period, one of them can be selected as the brightness value of the active screen backlight according to the user's needs, and the rest of them are the spare brightness values of the screen backlight. The duration value of the active screen backlight is one of duration values of the screen backlight. Namely no matter how many duration values of the screen backlight correspond to the each time period, one of them is selected as the duration value of the active screen backlight. If more than one duration value of the screen backlight correspond to one time period, one of them can be selected as the duration value of the active screen backlight according to the user's needs, and the rest of them are the spare duration values of the screen backlight. The brightness value of the active screen backlight and the duration value of the active screen backlight constitute the active screen backlight attributes.

The number of the brightness values of the screen backlight and the particular brightness value of the backlight corresponding to each time period, and the number of the duration values of the screen backlight and the particular duration value of the backlight corresponding to each time period, as described above, can be set according to the user's wishes.

Further, a time range of each time period comprises: the time between a start time point and an end time point within the time period and the start time point. For example, a time period (7:00, 17:00) represents that 7:00 is the start time point of the time period and 17:00 is the end time point of the time period. The time range included in the time period comprises: the start time point 7:00, and the time between the start time point 7:00 and the end time point 17:00, but not including the end time point 17:00.

The above-described time range of each time period can also be defined as: the time between the start time point and the end time point within the time period and the end time point. For example, a time period (7:00, 17:00) represents that 7:00 is the start time point of the time period and 17:00 is the end time point of the time period. The time range included in the time period comprises: the end time point 17:00, and the time between the start time point 7:00 and the end time point 17:00, but not including the start time point 7:00.

The present embodiment achieves the automatic control of the screen backlight, eliminating the need for manual control by a user, by way of querying in preset information for active screen backlight attributes corresponding to a time period which contains a current time point and controlling the screen backlight according to the active screen backlight attributes.

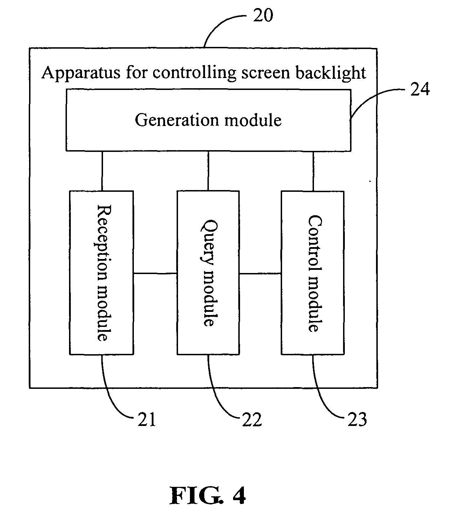

With reference to Fig. 4, an apparatus 20 for controlling the screen backlight according to another embodiment of the present invention is provided, and the apparatus comprises: a reception module 21, a query module 22 and a control module 23 and a generation module 24. The reception module 21 is configured for receiving a trigger instruction of the screen backlight. The query module 22 is configured for querying in preset information for active screen backlight attributes corresponding to a time period which contains a current time point. The control module 23 is configured for controlling the screen backlight according to the active screen backlight attributes. The generation module 24 is configured for receiving a set instruction, and generating the preset information according to the set instruction. The set instruction is inputted by a user. After the preset information is generated, the screen backlight can be controlled according to the preset information when a trigger instruction of the screen backlight is received.

The apparatus for controlling the screen backlight of the present invention can be applied for various electronic devices having the screen display function, e.g., various mobile terminal electronic devices such as cell phone, handheld TV, and media player etc..

It should be understood that above description is only to illustrate the preferred embodiments but not to limit the patent scope of the present invention. Various alterations and changes to the present invention are apparent to those skilled in the art. The scope defined in claims shall comprise equivalent structure or equivalent process transformation or direct or indirect application in the other relevant technology field by using the specification of the present invention and the accompany drawings.

## Claims

1. A method for controlling a screen backlight, **characterized by** comprising:
receiving a trigger instruction of the screen backlight;
querying in preset information for active screen backlight attributes corresponding to a time period, the time period containing a current time point; and
controlling the screen backlight according to the active screen backlight attributes.

2. The method for controlling the screen backlight according to claim 1, **characterized in that** said active screen backlight attributes comprise a brightness value and a duration value of the active screen backlight.

3. The method for controlling the screen backlight according to claim 2, **characterized in that** controlling the screen backlight comprising:
setting a screen backlight brightness to said brightness value of the active screen backlight;
calculating a screen backlight time; and
turning off the screen backlight when the screen backlight time reaches said duration value of the active screen backlight.

4. The method for controlling the screen backlight according to claim 3, **characterized in that** said preset information comprises screen backlight attributes corresponding to each one of at least two time periods, and
said screen backlight attributes comprise at least one brightness value and at least one duration value of the screen backlight;
wherein, said brightness value of the active screen backlight is one of said brightness values of the screen backlight; and said duration value of the active screen backlight is one of said duration values of the screen backlight.

5. The method for controlling the screen backlight according to any one of claims 1 to 4, **characterized in that** a time range of a time period comprises time between a start time point and an end time point within the time period and said start time point.

6. The method for controlling the screen backlight according to any one of claims 1 to 4, **characterized in that** the method further comprises:
receiving a set instruction, and generating said preset information according to said set instruction.

7. An apparatus for controlling a screen backlight, **characterized by** comprising:
a reception module for receiving a trigger instruction of the screen backlight;
a query module for querying in preset information for active screen backlight attributes corresponding to a time period which contains a current time point; and
a control module for controlling the screen backlight according to the active screen backlight attributes.

8. The apparatus for controlling the screen backlight according to claim 7, **characterized in that**
said active screen backlight attributes comprise a brightness value and a duration value of the active screen backlight.

9. The apparatus for controlling the screen backlight according to claim 8, **characterized in that** said control module comprises:
a calculation unit for setting a screen backlight brightness to said brightness value of the active screen backlight, and calculating a screen backlight time; and
a turn-off unit for turning off the screen backlight when the screen backlight time reaches the duration value of the active screen backlight.

10. The apparatus for controlling the screen backlight according to claim 9, **characterized in that** said preset information comprises screen backlight attributes corresponding to each one of at least two time periods; and
said screen backlight attributes comprise at least one brightness value of the screen backlight and at least one duration value of the screen backlight;
wherein, said brightness value of the active screen backlight is one of said brightness values of the screen backlight; and said duration value of the active screen backlight is one of said duration values of the screen backlight.

11. The apparatus for controlling the screen backlight according to any one of claims 7 to 10, **characterized in that**
a time range of each time period comprises the time between a start time point and an end time point within the time period and the start time point.

12. The apparatus for controlling the screen backlight according to any one of claims 7 to 10, **characterized in that** the apparatus further comprises a generation module for receiving a set instruction, and generating said preset information according to said set instruction.
